# EUROPEAN PATENT SPECIFICATION

(11) **EP 2 863 240 B1**
(45) Date of publication and mention of the grant of the patent: **23.05.2018**
(21) Application number: 14188481.7
(22) Date of filing: 10.10.2014
(51) Int. Cl.: G01S 13/86, F03D 80/10, G08G 5/00

(54) **Dynamic alarm zones for bird detection systems**
Dynamische Alarmzonen für Vogeldetektionssysteme
Zones d'alarme dynamique pour des systèmes de détection d'oiseaux

(30) Priority: 15.10.2013 DK 201300589
(43) Date of publication of application: 22.04.2015
(73) Proprietor: Robin Radar Facilities BV, 2516 AW The Hague (NL)
(72) Inventor: Hamminga, Siete, 2101 ZL Heemstede (NL); van Lieburg, Anthonie, 2912 XE Nieuwerkerk aan de IJssel (NL)
(74) Representative: Nordic Patent Service A/S

(56) References cited:
- WO-A2-2013/036727
- WO-A2-2013/053361
- US-A1- 2011 260 907
- US-A1- 2013 098 309
- CHEN WEISHI ET AL: "Avian radar system based on two scanning modes", JOURNAL OF BEIJING UNIVERSITY OF AERONAUTICS AND ASTRONAUTICS, vol. 35, no. 3, 1 March 2009 (2009-03-01), pages 380-383, XP055173767,
- "robin Systems & Services", , 28 November 2011 (2011-11-28), XP055173775, Retrieved from the Internet: URL:http://www.robinradar.com/wp-content/u ploads/2014/08/Brochure_-Systems-Services. pdf [retrieved on 2015-03-04]

## Description

### Field of the invention

The present invention relates to alarm and warning systems and methods for detecting the approach of objects to a prohibited area and eliciting a warning or an alarm when such objects are detected. More specifically the present invention relates to bird radar systems and methods for use at for instance airports to provide a warning or an alarm when a bird is are approaching a runway or in wind parks to provide a warning or an alarm when a bird is approaching a wind turbine.

### Background of the invention

Known bird radar systems, as disclosed in US 8456349, have a static 3D coverage zone that can be defined as an alarm zone. Within that zone specific birds (e.g. large birds and flocks) generate an audio or visual alarm. This alarm can be used to e.g. warn air traffic control, scare away birds or shut down wind turbines. The alarms are based on size and location of the bird only. In practice this leads to situations where there may be too many alarms, too many false alarms or alarms that come too late. US 2011/260907 A1 discloses a radar to prevent bird strike to wind generator with dynamically defined warning zones.

US 2013/098309 A1 discloses a radar for bird strike prevention defining dynamic system configuration.

WO 2013/053361 A2 discloses a radar for wind generators to prevent crashes with air-borne vehicles having dynamically defined, alarm zones. Under certain conditions no alarm is issued even when the object is within an alarm zone.

### Summary of the invention

On this background, it is an object of the present invention to provide a system and method for eliciting warnings/alarms in those cases where the approach of objects, such as birds, to a prohibited area, such as a runway is regarded to constitute an actual danger to for instance air planes landing on or taking off from a runway.

This object is achieved by providing a bird detection system according to claim 1 and a method according to claim 9. Particular embodiments of the invention are disclosed in dependent claims. Further objects, features, advantages and properties of the apparatus and method according to the disclosure will become apparent from the detailed description.

### Brief description of the drawings

In the following detailed portion of the present invention, the invention will be explained in more detail with reference to the example embodiments shown in the drawings, in which:
Fig. 1 is a schematic representation of the function of a prior art bird radar system;
Fig. 2 is a schematic representation of the function of a bird radar system according to an example embodiment in a first situation;
Fig. 3 is a schematic representation of the function of a bird radar system according to an example embodiment in a second situation;
Fig. 4 is a schematic representation of the function of a bird radar system according to an example embodiment in a third situation;
Fig. 5 is a schematic representation of the function of a bird radar system according to an example embodiment in a fourth situation;
Fig. 6 is a schematic representation of the function of a bird radar system according to an example embodiment in a fifth situation;
Figs. 7a and 7b show a flow charts illustrating generation of a dynamic alarm zone and requirements for generation of an alarm according to an example embodiment;
Fig. 8 is a schematic representation of the function of a bird radar system for a static collision object according to an example embodiment;
Fig. 9 is a schematic representation of the function of a bird radar system for another static collision object according to an example embodiment;
Fig. 10 is a schematic representation of the function of a bird radar system for a moving collision object according to an example embodiment; and
Fig. 11 is block diagram illustrating diagrammatically an example embodiment of the bird detection system according to an example embodiment.

### Detailed description of the invention

The following example embodiments and definitions relate to the bird detection system and the method of the present invention.

According to the basic working principle and example embodiment of the present invention, a dynamic alarm zone is an alarm zone that recurrently changes based on external parameters and bird characteristics. This reduces the number of alarms, but more importantly makes them more relevant. Besides location and bird size, all kind of parameters can be used to generate the dynamic alarm zones, such as, but not necessarily limited to the following:
- The speed of the bird;
- The direction of the bird (flies towards or away from the aircraft path/runway);
- The track shape (i.e. the track of the bird);
- The track length of the bird;
- The status of the collision object (e.g. plane, runway, wind turbine active)for instance take-off or landing of an air plane;
- The wind speed;
- The weather conditions;
- The location of the bird controller (distance to deterrent means).

The following detailed description relates to a specific, but non-limiting, example embodiment of the invention. This embodiment is a bird detection system for detecting and tracking birds that may pose a collision risk with a collision object such as air traffic or a wind turbine, where the bird detection system has a static coverage range. It would however also be possible to use non-static coverage ranges that might for instance adapt to certain specific dynamic conditions at the site of application of the detection system and embodiments applying such non-static coverage ranges will also fall within the scope of the present invention.

The bird detection system comprises one or more processors configured to detect and track a bird and to generate an alarm or alert when a tracked bird enters an alarm zone inside said static (or non-static) detection coverage range.

The above mentioned one or more processors are configured to dynamically, such as repeatedly, arrange the alarm zone within the detection coverage range using real time information. The real time information relates for instance to a detected bird, to weather conditions, to the collision object, such as an air plane or a wind turbine, or to specific user characteristics.

The one or more processors may accordingly be configured to determine the size and/or shape and/or location of the alarm zone based on real time information relating to a detected bird and/or relating to an object that is at risk of colliding with a bird and/or relating to weather conditions or to specific user characteristics.

According to an embodiment of the invention the detection system is based on radar detection of the birds, but it is understood that also other detection means could be employed and would fall within the scope of the present invention. Such detection means could for instance be cameras or even microphones (for instance directional microphones) or hydrophones or sonars for special applications of the system and method according to the invention.

The functioning of the system and method of the invention can be illustrated by the following non-limiting example in which the system according to the invention uses the following alarm algorithm:
1) Selecting risk birds only (existing technology on the horizontal radar) according to the following requirements:
   a. The RCS should be > 0.5 m²;
   b. The ground or airspeed should be > 20 m/s;
   c. The track should be longer than 15 seconds; or the track has a predefined shape (e.g. a circular shape for soaring birds).
2) Creating the dynamic zone according to the following requirements:
   d. Direction should potentially cross the target (e.g. runway);
   e. The time to intersect should be > 100 seconds (based on groundspeed); and
   f. Height of the bird should be < 150 meters.

If all points are valid, an alarm will be generated.

It is also within embodiments of the invention, that risk birds are selected according to the requirements:
aa. The reflection and or the radar cross section (RCS) of a detected bird is above a given threshold, such as above 0.5 m²;
bb. The ground or airspeed of the detected bird is above a given threshold, such as above 20 m/s;
cc. The track length of the detected bird is above a given threshold, such as above 15 seconds, or the track has a predefined shape (e.g. a circular shape for soaring birds);
dd. The height above ground of the tracked bird is within a predefined altitude window, such as the height of the detected bird being less than 150 meters above ground;

It is within embodiments of the invention that the dynamic alarm zone is generated based at least partly on the location of a collision object or target zone and based on the ground speed of a detected risk bird, so that the time for the detected bird to intersect with the collision object or target zone is above a predefined minimum time, such as larger than 100 seconds. An alarm will be generated for a detected or tracked bird, if it fulfils the requirements for being a risk bird, such as the requirements aa-dd, is detected as being located within the generated dynamic alarm zone, and the moving direction of the tracked bird is towards the collision object or target zone.

Advantages obtained with the system and method according to the invention can be illustrated by a comparison of the functioning of prior art systems and methods with the system and method according to the invention. In the following a (non-limiting) comparison is given:

### CURRENT SITUATION

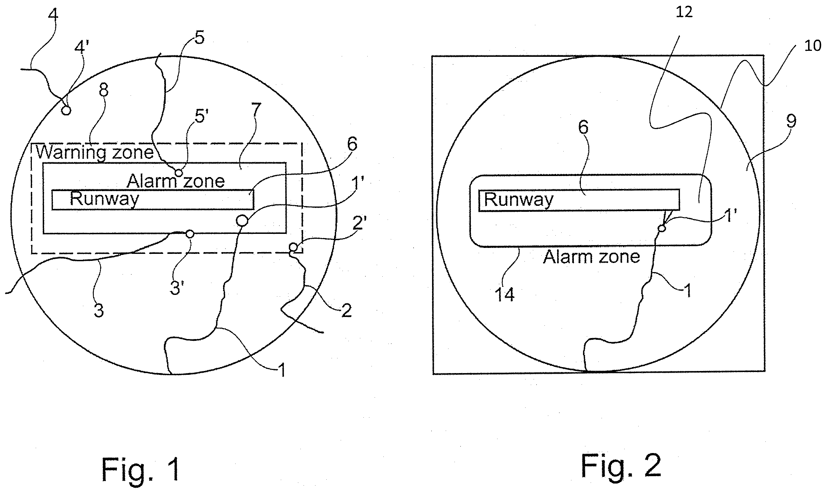

Currently alarm zones are three-dimensional, but based on location (latitude/longitude and height) and radar cross-section of the bird only. The current situation is illustrated in figure 1 that shows a runway 6 surrounded by an adjacent alarm zone 7, which is surrounded by a warning zone 8 at a relatively larger distance from the runway 6.

In figure 1, five different tracks of birds are indicated.
Track 1 is a track of large birds (RCS > 0.5 m²) of a critical height (h < 150 meters) and it moves into the alarm zone 7 as indicated by reference numeral 1'. Track 1 will hence generate an alarm.
Track 2 is also a track of large birds of a critical height, but terminating in the warning zone 8 as indicated by reference numeral 2'. Track 2 will hence generate a warning.
Track 3 is a track of small birds (RCS < 0.5 m²) and will hence neither generate a warning or an alarm.
Track 4 will neither generate a warning nor an alarm as it terminates outside the warning zone 8 as indicated by reference numeral 4'.
Track 5 is a track of birds moving above the critical height above the runway, i.e. more than 150 meters above the runway. It will hence neither generate a warning nor an alarm.

### USING DYNAMIC ALARM ZONES ACCORDING TO THE INVENTION

Using the system or method according to the invention, i.e. applying the dynamic alarm zones according to the invention, the alarm zone may look different for every track. The functioning of the system and method according to the invention is illustrated in figures 2 through 6.

Referring to figure 2, the alarm zone 9 has an outer boundary 10, which is here defined by an outer circle, and is much bigger than in prior art systems and methods (c.f. reference numeral 7 in figure 1) in order to provide the user with an earlier warning against a potential impact. When the same tracks 1 through 5 as described above in connection with figure 1 are considered, the outcome is completely different from that of the prior art system/method:
Track 1 will not generate an alarm. Although it might cross the runway 6, the terminating point 1' is too close to avoid crossing the runway and requirement (e) above, i.e. that the time to intersection should be > 100 seconds (based on groundspeed) is not fulfilled. This requirement will not be fulfilled when the terminating point 1' is located in an inner zone 12 indicated in figure 2. This inner zone 12 has a boundary 14 shown in figure 2 and indicates the sector 12 within which no alarm will be elicited. The boundary 14 of the inner zone 12 also defines an inner boundary of the alarm zone 9. Thus, the alarm zone 9 in figure 2 is defined by an outer boundary 10 and an inner boundary 14. The outer boundary 10 of the alarm zone 9 may be determined by the maximum detection range of the radar system, and may be static. However, the inner boundary 14 of the alarm zone 9 will be changed dynamically an may be changed in accordance with real time information relating to a detected bird and/or relating to an object being at risk of colliding with a detected bird. The inner 14 and/or outer 10 boundaries may also be changed based on information relating to weather conditions or to specific user characteristics.

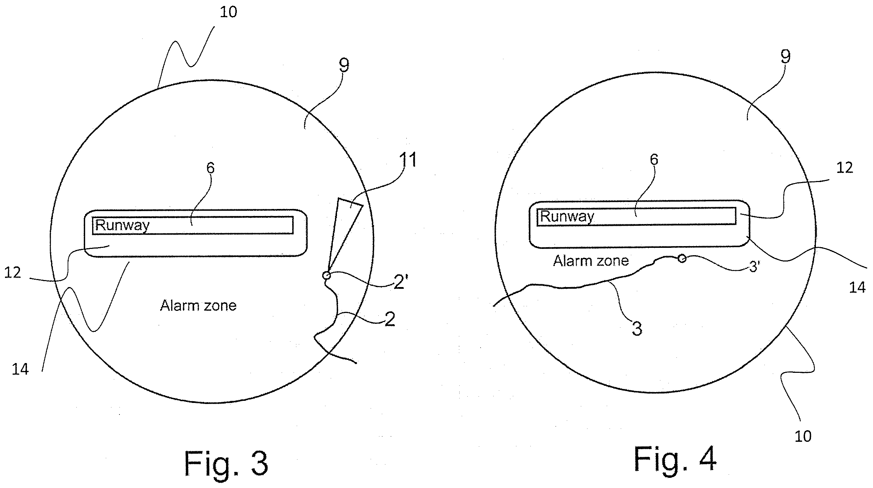

Referring to figure 3, the track 2 will not generate an alarm either. The bird will not cross the runway (as indicated by the direction funnel 11), which means that requirement (d) above will not be fulfilled.

Referring to figure 4, the track 3 will also not generate an alarm, as the birds are too small (RCS < 0.5 m²) corresponding to the similar situation indicated in figure 1.

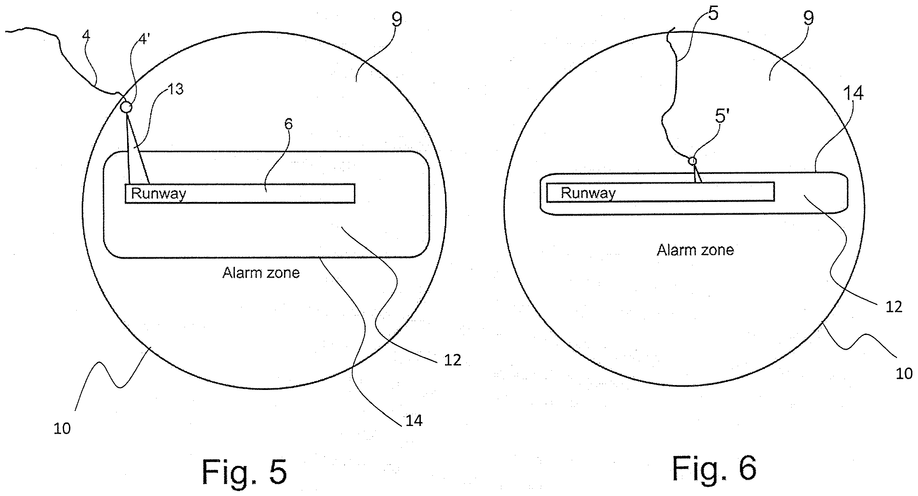

Referring to figure 5, the track 4 does generate an alarm. The inner zone or sector 12 is bigger due to a relatively high groundspeed of the bird, but the bird is still more than 100 seconds away from the runway 6. The direction of the bird it towards the runway 6 (as indicated by the direction funnel 13), and hence all requirements for generating an alarm are fulfilled.

Referring to figure 6, the track 5 will not generate an alarm. The inner zone or sector 12 is much smaller (e.g. due to decrease of wind or due to a lower groundspeed of the bird). The bird is heading towards the runway 6, but flying too high to generate and alarm.

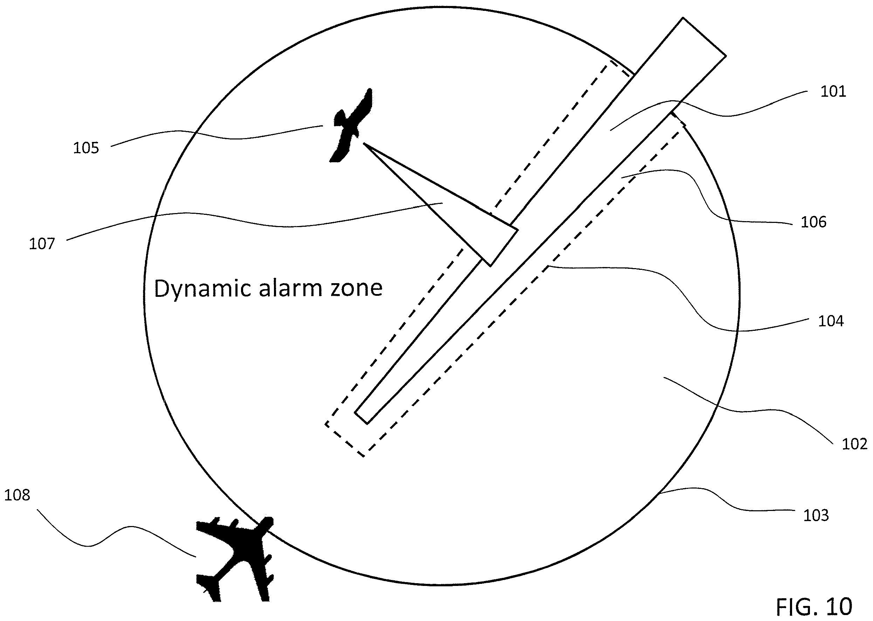

According to embodiments of the invention, the alarm zone 9 may also move together with planes that are approaching a runway or taking off. This may lead to a situation where alarms are only generated when there is a plane on collision course. This is illustrated in figure 10.

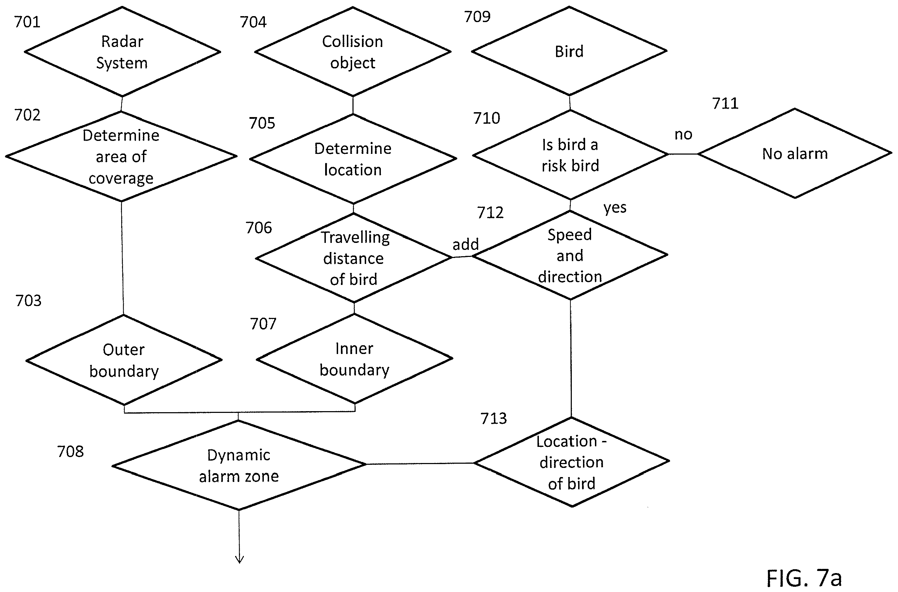

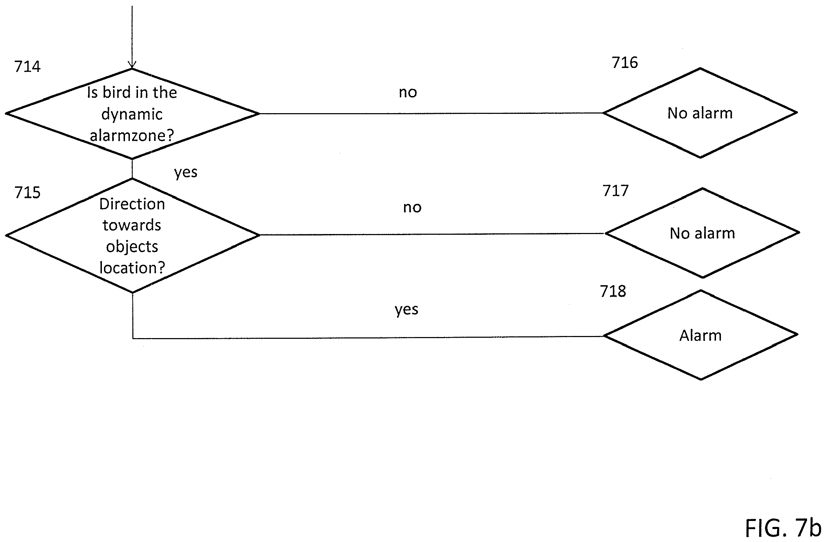

Figures 7a and 7b show flow charts illustrating generation of a dynamic alarm zone and requirements for generation of an alarm according to an example embodiment using a radar based detection system.

Referring to figures 7a and 7b, the outer boundary 10 of the dynamic alarm zone 9 is determined in step 703 by the detection range of the radar detection system, step 701, and by determined areas of interest and coverage, step 702. The dynamically changing inner boundary 14 of the alarm zone 9 is determined in step 707 from real time information of the collision object, step 704, where the future location of the collision object is determined in step 705, and from real time information of a detected bird, step 709. Furthermore, wind speed and direction may be taken into account when determining the inner boundary of the alarm zone.

For a static object like a runway the future location, step 705, is the location of the runway itself. For a wind turbine the future location may be a circular area where rotor blades can be spinning, the rotor swept area. For a plane, which may be approaching a runway, the future location may correspond to the flight path of the plane, which is where the plane can be within a predetermined time period of x minutes or seconds, such as 100 seconds. The flight path of the plane may depend on the speed of the plane, the type of the plane, and weather conditions such as wind conditions.

When a bird is detected, step 709, then from obtained information it is determined if the bird is a risk bird, step 710. In order to be a risk bird, the information of the detected bird shall fulfill at least part of some predefined requirements, such as: a) RCS shall be > 0,5 m², b) ground or airspeed shall be > 20 m/s, and c) the track of the bird shall be longer than 15 seconds, or have a predefined shape. It is also preferred that the information of the detected bird fulfils the predefined requirement f: the height of the detected bird shall be < than 150 meters.

If the bird is not a risk bird, then no alarm will be generated, step 711, and no resulting dynamic alarm zone and no inner alarm zone boundary need to be generated. If the bird is a risk bird, then moving direction and speed of the bird is determined, step 712.

The inner boundary of the alarm zone can be determined, step 707, from: the location of the collision object, or when the collision object is moving, the future location, which is defined as the location within a predetermined time period of x minutes or seconds, such as 100 seconds, step 705; the groundspeed of the detected bird, step 706; and the wind speed and direction.

Based on the groundspeed of the bird, the travelling distance of the bird is determined for the predetermined time period of x of minutes or seconds, such as 100 seconds. The determined travelling distance thus equals the length the detected bird can fly in the predetermined time, here 100 seconds, at the detected ground speed. However, based on wind conditions, the travelling distance will vary for different directions.

The inner boundary of the alarm zone can now be determined, step 707, by an area or sector surrounding the collision object where the boundary of the area has a distance to the collision object equal to a travelling distance of the bird, where the travelling distance defining the boundary is the determined ground speed based travelling distance being adjusted in different directions taking into account the wind speed and direction. Thus, the resulting bird travelling distance varies for different directions, and the resulting distance from the inner boundary of the alarm zone to the collision object will vary for different directions.

The outer alarm zone boundary determined in step 703 and the inner alarm zone boundary determined in step 707 now defines the resulting dynamic alarm zone, step 708. The location and direction of the detected bird is being tracked, step 713, and compared to the dynamic alarm zone, step 708.

If the bird is out of the dynamic alarm zone, there is no alarm, step 716, but if the bird is in the dynamic alarm zone, step 714, then it is determined if the bird has a direction towards the location or future location of the collision object. If the direction is not towards the collision object, there is no alarm, step 717, but if the direction is towards the collision object, an alarm is generated, step 718.

It is noted that the inner boundary of the dynamic alarm zone is defined based on the distance that a risk bird can fly within a predetermined time of reaction, where the reaction time may be set to 100 seconds. If a detected bird is flying towards the collision object, but it is so close to the object that is may collide with the object within a time period being shorter than the determined reaction time, such as 100 seconds, then there is not enough time to react to the bird anyway. Hence, there is no reason to generate an alarm, which is why the bird in this case is outside of the dynamic alarm zone, although the bird is inside the inner boundary of the alarm zone.

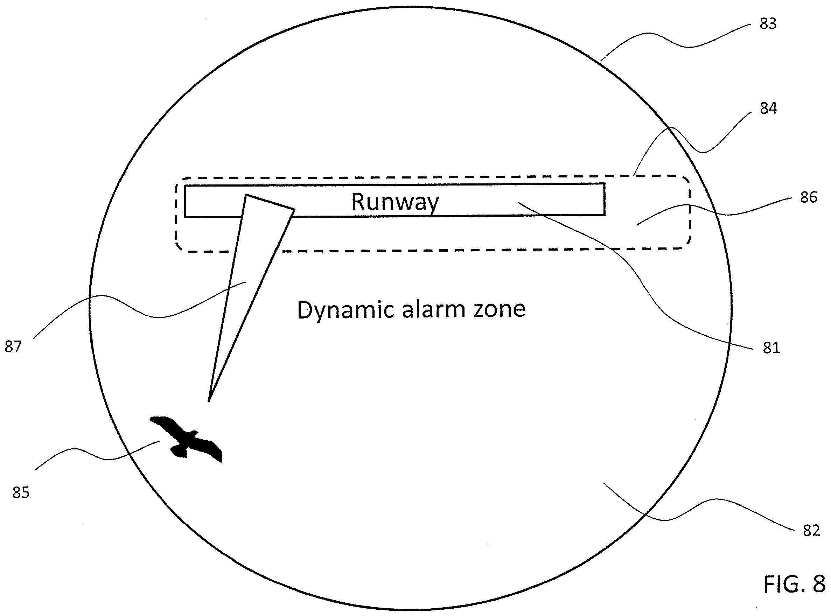

The dynamic alarm zones illustrated in figures 2-6 and the following figures 8-10 are shown as two dimensional plane alarm zones, where the inner and outer boundaries can be determined or generated following the procedures illustrated by the flow charts of figures 7a and 7b. Here the obtained information or parameters of a detected bird need to fulfil some predefined requirements in order for the bird to be classified as a risk bird, which will start generation of the dynamic alarm zone. One such predefined requirement is that the flying height of the bird shall be less than a predetermined height, which can be set to 150 meters. This corresponds to defining the height of the dynamic alarm zone. The dynamic alarm zone therefore can be considered to extend in three dimensions, with the third dimension being the height, which can be defined by a maximum flying height for a bird to be classified as a risk bird.

In cases where the collision object is a moving object, such as a plane approaching a runway, the determined future location or flight path of the plane may be at a certain height above ground plane. Here, the dynamic alarm zone may extend both above and below the altitude of the determined flight path. The above discussed maximum flying height of a risk bird may be added to the altitude of the flight path, defining an upper boundary height of the dynamic alarm zone, and if the altitude of the flight path is higher than the maximum flying height of the risk bird, this maximum flying height can be withdrawn from the altitude of the flight path to define a lower boundary height of the dynamic alarm zone.

Fig. 8 is a schematic representation of the function of a bird radar system for a static collision object. The example shown in figure 8 corresponds to the example shown in figure 6. The collision object is a static runway 81, and a dynamic alarm zone 82 is generated around the runway 81 following the procedures discussed above and illustrated in figures 7a and 7b. The dynamic alarm zone 82 has an outer boundary 83, which may be static, and an inner boundary 84, indicated by dotted lines in figure 8. The inner boundary 84 is changing with the information obtained from a detected risk bird 85 and with weather conditions. If a risk bird is detected within the area 86 inside the inner boundary 84, no alarm will be generated. In order for an alarm to be generated, the bird 85 has to be a risk bird, the bird 85 has to be within the dynamic alarm zone 82, and the bird 85 has to fly in a direction towards the runway 81. In figure 8, the bird 85 is a risk bird, it is in the alarm zone 82, and it has a direction towards the runway 81, as indicated by the direction funnel 87. Thus, an alarm is generated.

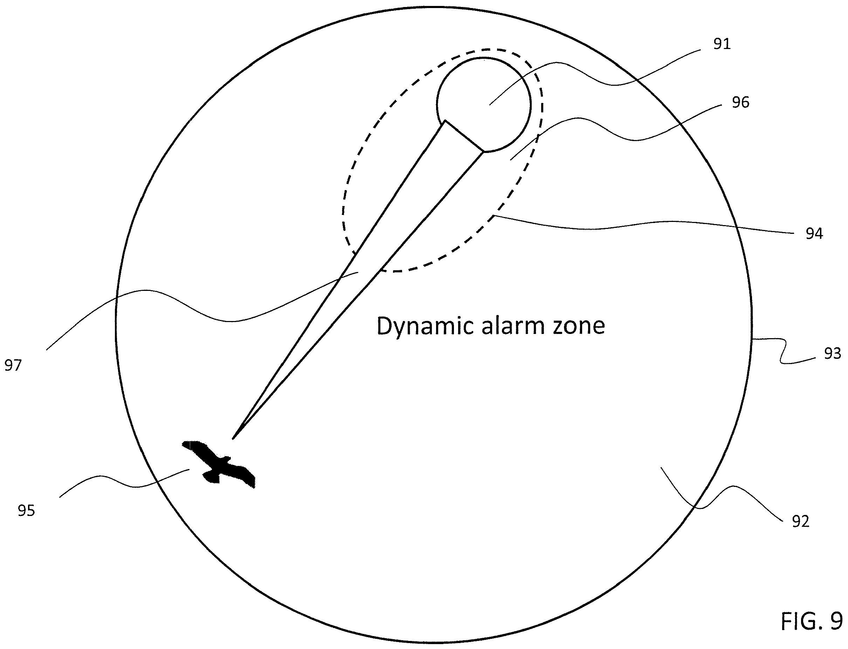

Fig. 9 is a schematic representation of the function of a bird radar system for another static collision object. The collision object is the rotor swept area 91 of a wind turbine, and a dynamic alarm zone 92 is generated around the rotor swept area 91 following the procedures discussed above and illustrated in figures 7a and 7b. The dynamic alarm zone 92 has an outer boundary 93, and an inner boundary 94, indicated by dotted lines in figure 9. Also here, the inner boundary 94 is changing with the information obtained from a detected risk bird 95 and with weather conditions. No alarm is generated if a risk bird is detected within the area 96 inside the inner boundary 94. In figure 9, the bird 95 is a risk bird, it is in the alarm zone 92, and it has a direction towards the rotor swept area 91, as indicated by the direction funnel 97, and an alarm is generated.

Fig. 10 is a schematic representation of the function of a bird radar system for a moving collision object. The collision object is a plane 108 and a future location and thereby collision area is defined by a flight path 101 of the plane 108. A dynamic alarm zone 102 is generated around the flight path 101 following the procedures discussed above and illustrated in figures 7a and 7b. The dynamic alarm zone 102 has an outer boundary 103, and an inner boundary 104, indicated by dotted lines in figure 10. Here, the inner boundary 104 is changing with the information obtained from a detected risk bird 105 and with weather conditions, but the inner boundary 104 will also be changed if the future location, i.e. the flight path 101, of the plane 108 is changed. No alarm is generated if a risk bird is detected within the area 106 inside the inner boundary 104. In figure 10, the bird 105 is a risk bird, it is in the alarm zone 102, and it has a direction towards the flight path 101, as indicated by the direction funnel 107, and an alarm is generated.

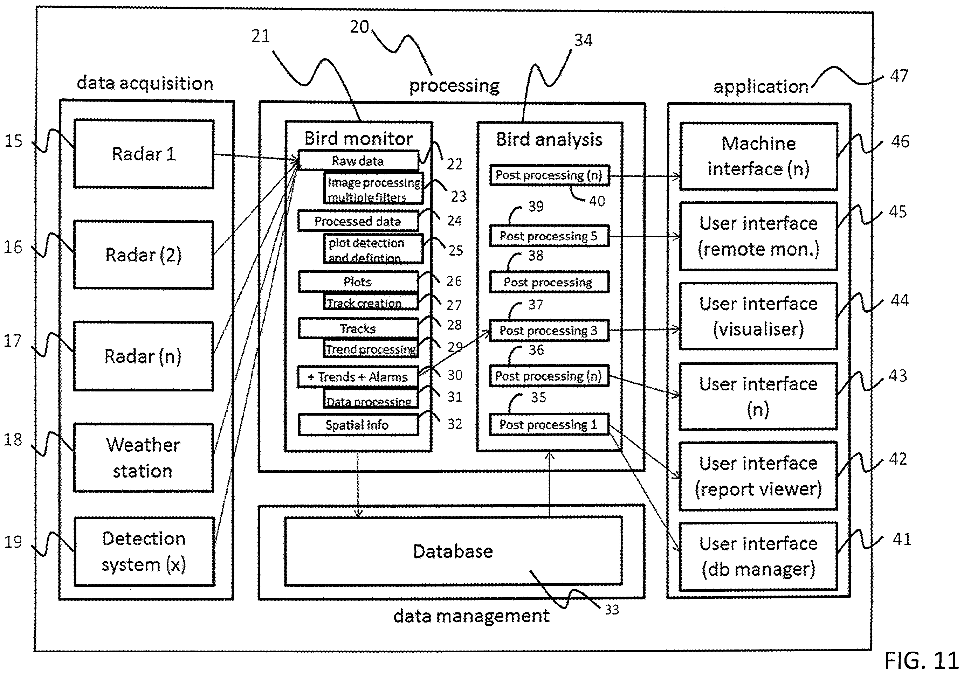

Referring to figure 11 there is shown a block diagram of an example embodiment of the system according to the invention.

The system according to this example embodiment comprises a number of data acquisition sensors 15, 16, 17, 18, 19. These sensors comprise one or more radars 15, 16, 17. There may be only a single radar, but a network of radars may alternatively be used. The radars can be local radars (S-band / X-band) but also long-range radars may be applied. According to a specific embodiment, two radars, one vertical and one horizontal are used. The horizontal radar provides latitude/longitude and size information of the birds, while the vertical radar provides height information and detailed information like wing beats. Besides radars a number of other sensors can be used to provide relevant data for the system. A weather station 18 is provided to for instance calculate ground or airspeed (groundspeed/direction and/or wind speed/direction). Cameras 19 can be used to compare radar reflection with images (type recognition). It would also fall within the scope of the present invention to use ADS-B systems to locate or double-check airplane locations and speed or predict future flight-paths.

The sensors provide information to the processing unit 20, which in practice consists of multiple processors (depending on number of servers). This information has multiple formats, but for the radar itself it consists of raw images with radar reflections. All of this information ends up in the bird monitor 21 in the form of raw data 22, which is the central part of the processing unit 20. In the first step (block 23) filtering is done. This filtering may comprise filtering of rain, ground clutter and moving objects (not being birds). The filters are contrary to prior art filters used in this technical field fully dynamic. It is understood that different image processing and filter algorithms may be used depending on the type of data acquisition device (such as the radars 15, 16, 17 and the digital cameras 19) that actually provide the raw data 22 to the bird monitor 21 shown in the block diagram in figure 11. After filtering, the processed data 24 is analysed 25 and plots are searched. A plot 26 is defined as a reflection (location and strength of the reflection) that is most probably a bird and could be part of a track. The plots (of multiple radars) are used to generate 27 3D tracks 28, the strength of plots is used to classify the tracks. The tracker that can be used is a tracker developed by the applicant as a tool that uses multiple tracking algorithms like Kalman filtering. The tracks are then analysed 29 for instance as to whether concentrations occur, and as to whether tracks generate alarms based on pre-set and flexible alarm algorithms (see generation of dynamic alarm zones and generation of an alarm, figures 7a and 7b).

The information provided by the bird monitor is then stored in a database 33 (PostgreSQL or MySQL). This database 33 is preferably located on a separate server, with powerful data management/back-up facilities.

The second part of the processor 20 is the bird analysis part 34. In this part data is post processed (blocks 35 through 40) for all kind of different interfaces. The most common ones are the visualizer 44 (real time monitoring), the remote monitor 45 (operator interface) and the report viewer 42 (data base analysis). The output of the bird monitor 21 is processed in such a way that data becomes available for interfacing tools in a light and standard communication protocol. All processing is done in the bird analysis module 34, whereas the applications 47 themselves only have to do the visualisation and user-interaction.

The applications 47 can vary a lot. First of all there are all kind of users (end users, operators, maintenance and support) and these groups have fully different requirements per market: ATC versus bird control versus wind turbine or wind park operator.

A number of important advantages are obtained by the system and method according to the present invention. Thus, the application of the dynamic zones according to the invention reduces the number of alarms and only the relevant ones remain. The system may calculate a specific zone for each track and collision object (e.g. plane) and may refreshe/recalculate it at every radar update.

## Claims

1. A radar (15, 16, 17) based bird detection system for detecting and tracking birds (85, 95, 105) that may pose a collision risk with a collision object (6, 81, 91, 108) such as air traffic or a wind turbine, said bird detection system having a detection coverage range,
said bird detection system comprising one or more processors (20) configured to detect and track a bird (85, 95, 105) and to generate an alarm or alert when a tracked bird enters an alarm zone (9, 82, 92, 102) inside said detection coverage range,
said one or more processors (20) are configured to dynamically arrange the alarm zone (9, 82, 92, 102) within said detection coverage range using real time information,
wherein said real time information holds information representing one or more of a reflection and/or radar cross section (RCS) of a detected bird, type of bird, air or ground speed of the detected bird, track length and/or track shape of the detected bird, a status of the collision object, wind speed and/or direction, weather conditions, and a distance from a user to the detected bird,
wherein said alarm zone (9, 82, 92, 102) has an outer boundary (10, 83, 93, 103) and an inner boundary (14, 84, 94, 104), **characterized in that**
said one or more processors (20) are configured to dynamically change said inner boundary (14, 84, 94, 104) based on location of the collision object (6, 81, 91, 108), groundspeed of the detected bird (85, 95, 105), and wind speed and direction, and **in that**
said one or more processors (20) are further configured not to allow generation of an alarm when a detected bird (85, 95, 105) is inside the inner boundary (14, 84, 94, 104) of the alarm zone (9, 82, 92, 102) and thereby outside the alarm zone defined by said outer and inner boundaries.

2. A bird detection system according to claim 1, wherein the detection coverage range of the bird detection system is a static detection coverage range.

3. A bird detection system according to claim 1 or 2, wherein said one or more processors (20) are configured to allow generation of an alarm for a tracked bird (85, 95, 105) only when:
a. the reflection and or the radar cross section (RCS) of the detected bird (85, 95, 105) is above a given threshold, and
b. the ground or airspeed of the detected bird (85, 95, 105) is above a given threshold, and
c. the track length of the detected bird (85, 95, 105) is above a given threshold or the track has a predefined shape, e.g. a circular shape for soaring birds.

4. A bird detection system according to any one of claims 1 to 3, wherein said one or more processors (20) are configured to arrange said dynamic alarm zone (9, 82, 92, 102) based on one or more of the following parameters:
a. the heading a of the tracked bird (85, 95, 105),
b. the speed of the tracked bird (85, 95, 105),
c. the height of the tracked bird (85, 95, 105),
d. the speed, if any, of a collision object (6, 81, 91, 108),
e. the heading, if any, of a collision object (6, 81, 91, 108),
f. the height of a collision object (6, 81, 91, 108).

5. A bird detection system according to any one of claims 1 to 4, wherein said one or more processors (20) are configured to allow generation of an alarm for a tracked bird (85, 95, 105) only when:
a. the direction of the tracked bird (85, 95, 105) potentially crosses a target zone (6, 81, 91, 101), such as a runway (6, 81) or a planned, pre-calculated flight path (101),
b. an estimated time to intersection with the target zone (6, 81, 91, 101) is above a predefined minimum time;
c. the height above ground of the tracked bird (85, 95, 105)is within a predefined altitude window.

6. A bird detection system according to any one of claims 1 to 5, wherein said detection system is a radar based system comprising a single or set of radar transmitters (15, 16, 17), movable radar antennas, receivers, camera's (19), samplers sampling a received signal and processing units (20) for processing the samples signal.

7. A bird detection system according to any of the preceding claims, comprising:
a bird detection processing device (20) configured for receiving input from data acquisition devices, such as radars (15, 16, 17), cameras (19), and weather stations (18), and for providing warning or alarm signals to application interfaces (41, 42, 43, 44, 45, 46), such as machine interfaces and/or user interfaces, said processing device (20)comprising:
(i) a bird monitor (21) configured to receive raw data from said data acquisition devices (15, 16, 17, 18, 19), and provided with means (23) for image processing of the raw data, thereby providing processed data (24), and plot detection and definition means (25) analyzing the processed data and determining plots (26), and means (27) that generate tracks (28) based on said plots (26), and means (29) for analysing said tracks (28) as to whether tracks are to generate alarms, thereby providing trend and alarm data (30); and
(ii) a bird analysis block (34) configured to receive data from said trend and alarm data block (30) and providing post processing of such data that is necessary in relation to each specific interface applications (41, 42, 43, 44, 45).

8. A bird detection system according to claim 7, wherein the system comprises a database (33) for receiving data provided by said bird monitor (21) and providing such data to said bird analysis block (34).

9. A method for arranging an alarm zone in a detection coverage range of a radar (15, 16, 17) based bird detection system, the method comprising:
detecting and tracking a bird (85, 95, 105) in said detection coverage range,
define an alarm zone (9, 82, 92, 102) with a given shape, size and position within said detection coverage range,
associating said alarm zone (9, 82, 92, 102) with said tracked bird (85, 95, 105),
dynamically arrange said alarm zone (9, 82, 92, 102) within said detection coverage range based on real time information,
said real time information relating to an object (6, 81, 91, 108) that is at risk of colliding with a bird and holding information representing one or more of a reflection and/or radar cross section (RCS) of a detected bird, type of bird, air or ground speed of the detected bird, track length and/or track shape of the detected bird, a status of the collision object, wind speed and/or direction, weather conditions, and a distance from a user to the detected bird,
said alarm zone (9, 82, 92, 102) having an outer boundary (10, 83, 93, 103) and an inner boundary (14, 84, 94, 104), **characterized in that**
the method further comprises dynamically changing said inner boundary (14, 84, 94, 104) based on location of the collision object (6, 81, 91, 108), groundspeed of the detected bird, and wind speed and direction, and **in that**
generation of an alarm is not allowed when the detected bird (85, 95, 105) is inside the inner boundary (14, 84, 94, 104) of the alarm zone (9, 82, 92, 102) and thereby outside the alarm zone defined by said outer and inner boundaries.

10. A method according to claim 9, wherein the detection coverage range of the bird detection system is a static detection coverage range.

11. A method according to claim 9 or 10, further comprising allowing generation of an alarm for a tracked bird (85, 95, 105) only when:
a. the reflection and/or the radar cross section (RCS) of the detected bird (85, 95, 105) is above a given threshold, and
b. the ground or airspeed of the detected bird (85, 95, 105) is above a given threshold, and
c. the track length of the detected bird (85, 95, 105) is above a given threshold or the track has a predefined shape (e.g. a circular shape for soaring birds).

12. A method according to any one of claims 9 to 11, further comprising allowing generation of an alarm for a tracked bird (85, 95, 105) only when:
a. the direction of the tracked bird s(85, 95, 105) hould potentially cross a target zone (6, 81, 91, 101), such as a runway (6, 81);
b. an estimated time to intersection with the target zone (6, 81, 91, 101) is above a predefined minimum time; and
c. the height above ground of the tracked bird (85, 95, 105) is within a predefined altitude window.

13. A method according to any one of claims 9 to 12, wherein said real time information is used for continuously updated collision probability analysis.

## Patentansprüche

1. Auf Radar (15, 16, 17) basierendes Vogeldetektionssystem zum Detektieren und zur Kurserfassung von Vögeln (85, 95, 105), die ein Kollisionsrisiko gegenüber einem Kollisionsobjekt (6, 81, 91, 108) wie beispielsweise Luftverkehr oder einer Windturbine darstellen können, wobei das Vogeldetektionssystem eine Detektionsbereichsreichweite aufweist,
wobei das Vogeldetektionssystem eine oder mehrere Verarbeitungseinheiten (20) umfasst, die dafür konfiguriert sind, einen Vogel (85, 95, 105) zu detektieren und dessen Kurs zu erfassen und einen Alarm oder ein Warnsignal zu erzeugen, wenn ein erfasster Vogel in eine Alarmzone (9, 82, 92, 102) innerhalb der Detektionsbereichsreichweite eindringt,
wobei die eine oder die mehreren Verarbeitungseinheiten (20) dafür konfiguriert sind, die Alarmzone (9, 82, 92, 102) unter Verwendung von Echtzeitinformationen dynamisch innerhalb der Detektionsbereichsreichweite einzurichten,
wobei die Echtzeitinformationen Informationen enthalten, die eines oder mehrere einer Reflektion und/oder eines Radarquerschnitts (RCS) eines detektierten Vogels, Vogelart, Luft- oder Grundgeschwindigkeit des detektierten Vogels, Kurslänge und/oder Kursform des detektierten Vogels, eines Status des Kollisionsobjekts, Windgeschwindigkeit und/oder -richtung, Wetterbedingungen und einer Entfernung eines Nutzers zum erfassten Vogel darstellen,
wobei die Alarmzone (9, 82, 92, 102) eine Außengrenze (10, 83, 93, 103) und eine Innengrenze (14, 84, 94, 104) aufweist, **dadurch gekennzeichnet, dass**
die eine oder die mehreren Verarbeitungseinheiten (20) dafür konfiguriert sind, basierend auf Standort des Kollisionsobjekts (6, 81, 91, 108), Grundgeschwindigkeit des erfassten Vogels (85, 95, 105) und Windgeschwindigkeit und -richtung die Innengrenze (14, 84, 94, 104) dynamisch zu ändern, und dass
die eine oder die mehreren Verarbeitungseinheiten (20) ferner dafür konfiguriert sind, die Erzeugung eines Alarms nicht zu gestatten, wenn sich ein erfasster Vogel (85, 95, 105) innerhalb der Innengrenze (14, 84, 94, 104) der Alarmzone (9, 82, 92, 102) und somit außerhalb der durch die Außen- und die Innengrenze definierten Alarmzone befindet.

2. Vogeldetektionssystem nach Anspruch 1, wobei es sich bei der Detektionsbereichsreichweite des Vogeldetektionssystems um eine statische Detektionsbereichsreichweite handelt.

3. Vogeldetektionssystem nach Anspruch 1 oder 2, wobei die eine oder die mehreren Verarbeitungseinheiten (20) dafür konfiguriert sind, die Erzeugung eines Alarms bei einem erfassten Vogel (85, 95, 105) nur dann zu gestatten, wenn:
a. die Reflektion und/oder der Radarquerschnitt (RCS) des detektierten Vogels (85, 95, 105) oberhalb eines gegebenen Schwellenwerts liegt und
b. die Grund- oder Luftgeschwindigkeit des detektierten Vogels (85, 95, 105) oberhalb eines gegebenen Schwellenwerts liegt und
c. die Kurslänge des detektierten Vogels (85, 95, 105) oberhalb eines gegebenen Schwellenwerts liegt oder der Kurs eine vorab definierte Form aufweist, z.B. bei Vögeln im Segelflug eine Kreisform.

4. Vogeldetektionssystem nach einem der Ansprüche 1 bis 3, wobei die eine oder die mehreren Verarbeitungseinheiten (20) dafür konfiguriert sind, die dynamische Alarmzone (9, 82, 92, 102) basierend auf einem oder mehreren der folgenden Parameter einzurichten:
a. der Richtung des erfassten Vogels (85, 95, 105),
b. der Geschwindigkeit des erfassten Vogels (85, 95, 105),
c. der Höhe des erfassten Vogels (85, 95, 105),
d. gegebenenfalls der Geschwindigkeit eines Kollisionsobjekts (6, 81, 91, 108),
e. gegebenenfalls der Richtung eines Kollisionsobjekts (6, 81, 91, 108),
f. der Höhe eines Kollisionsobjekts (6, 81, 91, 108).

5. Vogeldetektionssystem nach einem der Ansprüche 1 bis 4, wobei die eine oder die mehreren Verarbeitungseinheiten (20) dafür konfiguriert sind, die Erzeugung eines Alarms bei einem erfassten Vogel (85, 95, 105) nur dann zu gestatten, wenn:
a. die Richtung des erfassten Vogels (85, 95, 105) möglicherweise eine Zielzone (6, 81, 91, 101) wie beispielsweise eine Landebahn (6, 81) oder eine geplante, vorab berechnete Flugbahn (101) kreuzt,
b. eine geschätzte Zeit bis zur Kreuzung mit der Zielzone (6, 81, 91, 101) oberhalb einer vorab definierten Mindestzeit liegt,
c. die Höhe über Grund des erfassten Vogels (85, 95, 105) innerhalb eines vorab definierten Höhenfensters liegt.

6. Vogeldetektionssystem nach einem der Ansprüche 1 bis 5, wobei es sich beim Detektionssystem um ein auf Radar basierendes System handelt, das ein einzelnes Exemplar oder eine Gruppe von Radarsendern (15, 16, 17), bewegbaren Radarantennen, Empfängern, Kameras (19), Abtastern zum Abtasten eines empfangenen Signals und Verarbeitungseinheiten (20) zum Verarbeiten des abgetasteten Signals umfasst.

7. Vogeldetektionssystem nach einem der vorhergehenden Ansprüche, umfassend:
eine Vogeldetektions-Verarbeitungseinrichtung (20), die dafür konfiguriert ist, Eingaben von Datenerfassungseinrichtungen wie beispielsweise Radaren (15, 16, 17), Kameras (19) und Wetterstationen (18) zu empfangen und Anwendungsschnittstellen (41, 42, 43, 44, 45, 46) wie beispielsweise Maschinenschnittstellen und/oder Nutzerschnittstellen Warn- oder Alarmsignale bereitzustellen, wobei die Verarbeitungseinrichtung (20) Folgendes umfasst:
(i) eine Vogelüberwachungseinrichtung (21), die dafür konfiguriert ist, Rohdaten von den Datenerfassungseinrichtungen (15, 16, 17, 18, 19) zu empfangen, und über Mittel (23) zur Bildverarbeitung der Rohdaten und damit zum Bereitstellen verarbeiteter Daten (24) verfügt, sowie über Meldungsdetektions- und -definitionsmittel (25), welche die verarbeiteten Daten analysieren und Meldungen (26) bestimmen, sowie über Mittel (27), die basierend auf den Meldungen (26) Kurse (28) erzeugen, und über Mittel (29) zum Analysieren der Kurse (28) daraufhin, ob Kurse Alarme erzeugen sollen, wodurch Verlaufs- und Alarmdaten (30) erzeugt werden, und
(ii) einen Vogelanalyseblock (34), der dafür konfiguriert ist, Daten vom Verlaufs- und Alarmdatenblock (30) zu empfangen, und der eine Nachbearbeitung solcher Daten bereitstellt, die bezüglich jeder spezifischen Schnittstellenanwendung (41, 42, 43, 44, 45) erforderlich ist.

8. Vogeldetektionssystem nach Anspruch 7, wobei das System eine Datenbank (33) zum Empfangen durch die Vogelüberwachungseinrichtung (21) bereitgestellten Daten und zum Bereitstellen solcher Daten an den Vogelanalyseblock (34) umfasst.

9. Verfahren zum Einrichten einer Alarmzone in einer Detektionsbereichsreichweite eines auf Radar (15, 16, 17) basierenden Vogeldetektionssystems, wobei das Verfahren Folgendes umfasst:
Detektieren und Kurserfassung eines Vogels (85, 95, 105) in der Detektionsbereichsreichweite,
Definieren einer Alarmzone (9, 82, 92, 102) mit einer gegebenen Form, Größe und Lage innerhalb der Detektionsbereichsreichweite,
Assoziieren der Alarmzone (9, 82, 92, 102) mit dem erfassten Vogel (85, 95, 105),
dynamisches Einrichten der Alarmzone (9, 82, 92, 102) innerhalb der Detektionsbereichsreichweite basierend auf Echtzeitinformationen,
wobei die Echtzeitinformationen ein Objekt (6, 81, 91, 108) betreffen, das Gefahr läuft, mit einem Vogel zu kollidieren, und Informationen enthalten, die eines oder mehrere einer Reflektion und/oder eines Radarquerschnitts (RCS) eines detektierten Vogels, Vogelart, Luft- oder Grundgeschwindigkeit des detektierten Vogels, Kurslänge und/oder Kursform des detektierten Vogels, eines Status des Kollisionsobjekts, Windgeschwindigkeit und/oder -richtung, Wetterbedingungen und einer Entfernung eines Nutzers zum erfassten Vogel darstellen,
wobei die Alarmzone (9, 82, 92, 102) eine Außengrenze (10, 83, 93, 103) und eine Innengrenze (14, 84, 94, 104) aufweist, **dadurch gekennzeichnet, dass**
das Verfahren ferner ein dynamisches Ändern der Innengrenze (14, 84, 94, 104) basierend auf Standort des Kollisionsobjekts (6, 81, 91, 108), Grundgeschwindigkeit des erfassten Vogels und Windgeschwindigkeit und -richtung umfasst und dass
die Erzeugung eines Alarms nicht gestattet wird, wenn sich der erfasste Vogel (85, 95, 105) innerhalb der Innengrenze (14, 84, 94, 104) der Alarmzone (9, 82, 92, 102) und somit außerhalb der durch die Außen- und die Innengrenze definierten Alarmzone befindet.

10. Verfahren nach Anspruch 9, wobei es sich bei der Detektionsbereichsreichweite des Vogeldetektionssystems um eine statische Detektionsbereichsreichweite handelt.

11. Verfahren nach Anspruch 9 oder 10, ferner umfassend Gestatten der Erzeugung eines Alarms bei einem erfassten Vogel (85, 95, 105) nur dann, wenn:
a. die Reflektion und/oder der Radarquerschnitt (RCS) des detektierten Vogels (85, 95, 105) oberhalb eines gegebenen Schwellenwerts liegt und
b. die Grund- oder Luftgeschwindigkeit des detektierten Vogels (85, 95, 105) oberhalb eines gegebenen Schwellenwerts liegt und
c. die Kurslänge des detektierten Vogels (85, 95, 105) oberhalb eines gegebenen Schwellenwerts liegt oder der Kurs eine vorab definierte Form aufweist (z.B. bei Vögeln im Segelflug eine Kreisform).

12. Verfahren nach einem der Ansprüche 9 bis 11, ferner umfassend Gestatten der Erzeugung eines Alarms bei einem erfassten Vogel (85, 95, 105) nur dann, wenn:
a. die Richtung des erfassten Vogels (85, 95, 105) möglicherweise eine Zielzone (6, 81, 91, 101) wie beispielsweise eine Landebahn (6, 81) kreuzen sollte,
b. eine geschätzte Zeit bis zur Kreuzung mit der Zielzone (6, 81, 91, 101) oberhalb einer vorab definierten Mindestzeit liegt,
c. die Höhe über Grund des erfassten Vogels (85, 95, 105) innerhalb eines vorab definierten Höhenfensters liegt.

13. Verfahren nach einem der Ansprüche 9 bis 12, wobei die Informationen zur kontinuierlich aktualisierten Kollisionswahrscheinlichkeitsanalyse verwendet werden.

## Revendications

1. Radar (15, 16, 17) basé sur un système de détection d'oiseaux pour détecter et pister des oiseaux (85, 95, 105) qui peuvent poser un risque de collision avec un objet de collision (6, 81, 91, 108) comme le trafic aérien ou une éolienne, ledit système de détection d'oiseaux ayant une plage de couverture de détection,
ledit système de détection d'oiseaux comprenant un ou plusieurs processeur(s) (20) configuré(s) pour détecter et pister un oiseau (85, 95, 105) et pour générer une alarme ou une alerte lorsqu'un oiseau pisté pénètre une zone d'alarme (9, 82, 92, 102) à l'intérieur de ladite plage de couverture de détection,
ledit/lesdits un ou plusieurs processeur(s) (20) est/sont configuré(s) pour agencer de façon dynamique la zone d'alarme (9, 82, 92, 102) à l'intérieur de ladite plage de couverture de détection en utilisant des informations en temps réel,
dans lequel lesdites informations en temps réel contiennent des informations représentant une ou plusieurs d'une réflexion et/ou d'une section transversale de radar (RCS) d'un oiseau détecté, d'un type d'oiseau, de vitesse en l'air ou au sol de l'oiseau détecté, de longueur de piste et/ou de forme de piste de l'oiseau détecté, d'un statut de l'objet de collision, de vitesse et/ou de direction du vent, de conditions météorologiques et d'une distance d'un utilisateur à l'oiseau détecté,
dans lequel ladite zone d'alarme (9, 82, 92, 102) présente une limite extérieure (10, 83, 93, 103) et une limite intérieure (14, 84, 94, 104), **caractérisé en ce que**
ledit/lesdits un ou plusieurs processeur(s) (20) est/sont configuré(s) pour changer de façon dynamique ladite limite intérieure (14, 84, 94, 104) en se basant sur l'emplacement de l'objet de collision (6, 81, 91, 108), la vitesse au sol de l'oiseau détecté (85, 95, 105) et la vitesse et la direction du vent, et **en ce que**
ledit/lesdits un ou plusieurs processeur(s) (20) est/sont en outre configuré(s) pour ne pas permettre la génération d'une alarme lorsqu'un oiseau détecté (85, 95, 105) est à l'intérieur de la limite intérieure (14, 84, 94, 104) de la zone d'alarme (9, 82, 92, 102) et par conséquent en-dehors de la zone d'alarme définie par lesdites limites extérieure et intérieure.

2. Système de détection d'oiseaux selon la revendication 1, dans lequel la plage de couverture de détection du système de détection d'oiseaux est une plage de couverture de détection statique.

3. Système de détection d'oiseaux selon la revendication 1 ou 2, dans lequel ledit/lesdits un ou plusieurs processeur(s) (20) est/sont configuré(s) pour permettre la génération d'une alarme pour un oiseau pisté (85, 95, 105) uniquement lorsque :
a. la réflexion et/ou la section transversale de radar (RCS) de l'oiseau détecté (85, 95, 105) se situe au-dessus d'un seuil donné, et
b. la vitesse au sol ou en l'air de l'oiseau détecté (85, 95, 105) se situe au-dessus d'un seuil donné, et
c. la longueur de piste de l'oiseau détecté (85, 95, 105) se situe au-dessus d'un seuil donné ou la piste a une forme prédéfinie, par ex. une forme circulaire pour les oiseaux qui prennent leur envol.

4. Système de détection d'oiseaux selon l'une quelconque des revendications 1 à 3, dans lequel ledit/lesdits un ou plusieurs processeur(s) (20) est/sont configuré(s) pour agencer ladite zone d'alarme dynamique (9, 82, 92, 102) en se basant sur un ou plusieurs des paramètres suivants :
a. le cap de l'oiseau pisté (85, 95, 105),
b. la vitesse de l'oiseau pisté (85, 95, 105),
c. la hauteur de l'oiseau pisté (85, 95, 105),
d. la vitesse, si présent, d'un objet de collision (6, 81, 91, 108),
e. le cap, si présent, d'un objet de collision (6, 81, 91, 108),
f. la hauteur d'un objet de collision (6, 81, 91, 108).

5. Système de détection d'oiseaux selon l'une quelconque des revendications 1 ou 4, dans lequel ledit/lesdits un ou plusieurs processeur(s) (20) est/sont configuré(s) pour permettre la génération d'une alarme pour un oiseau pisté (85, 95, 105) uniquement lorsque :
a. la direction de l'oiseau pisté (85, 95, 105) croise potentiellement une zone cible (6, 81, 91, 101) telle qu'une piste (6, 81) ou une trajectoire de vol (101) planifiée, pré-calculée,
b. un temps estimé pour l'intersection avec la zone cible (6, 81, 91, 101) se situe au-dessus d'une durée minimale prédéfinie ;
c. la hauteur au-dessus du sol de l'oiseau pisté (85, 95, 105) se situe dans une fenêtre d'altitude prédéfinie.

6. Système de détection d'oiseaux selon l'une quelconque des revendications 1 ou 5, dans lequel ledit système de détection est un système basé sur radar comprenant un seul transmetteur radar ou un jeu de transmetteurs radars (15, 16, 17), des antennes radars mobiles, des récepteurs, des caméras (19), des échantillonneurs échantillonnant un signal reçu et des unités de traitement (20) pour traiter le signal d'échantillon.

7. Système de détection d'oiseaux selon l'une quelconque des revendications précédentes, comprenant :
un dispositif de traitement de la détection d'oiseaux (20) configuré pour recevoir des entrées de dispositifs d'acquisition de données, tels que des radars (15, 16, 17), des caméras (19), et des stations météorologiques (18), et pour fournir des signaux d'avertissement ou d'alarme à des interfaces d'application (41, 42, 43, 44, 45, 46), telles que des interfaces machine et/ou des interfaces utilisateur, ledit dispositif de traitement (20) comprenant :
(i) un moniteur d'oiseaux (21) configuré pour recevoir des données brutes provenant desdits dispositifs d'acquisition de données (15, 16, 17, 18, 19), et doté d'un moyen (23) pour le traitement d'image des données brutes, fournissant ainsi des données traitées (24), et un moyen de détection et définition de tracé (25) analysant les données traitées et déterminant des tracés (26) et un moyen (27) qui génère des pistes (28) basées sur lesdits tracés (26), et un moyen (29) pour analyser lesdites pistes (28) selon que les pistes doivent générer des alarmes ou non, fournissant ainsi des données de tendance et d'alarme (30) ; et
(ii) un bloc d'analyse d'oiseau (34) configuré pour recevoir des données dudit bloc de données de tendance et d'alarme (30) et fournissant un post-traitement de ces données qui est nécessaire en lien avec chaque application d'interface spécifique (41, 42, 43, 44, 45).

8. Système de détection d'oiseaux selon la revendication 7, dans lequel le système comprend une base de données (33) pour recevoir des données fournies par ledit moniteur d'oiseaux (21) et fournir ces données audit bloc d'analyse d'oiseaux (34).

9. Procédé d'agencement d'une zone d'alarme dans une plage de couverture de détection d'un radar (15, 16, 17) basé sur un système de détection d'oiseaux, le procédé comprenant :
la détection et le pistage d'un oiseau (85, 95, 105) dans ladite plage de couverture de détection,
la définition d'une zone d'alarme (9, 82, 92, 102) avec une forme, une taille et une position données à l'intérieur de la plage de couverture de détection,
l'association de ladite zone d'alarme (9, 82, 92, 102) audit oiseau pisté (85, 95, 105),
l'agencement dynamique de ladite zone d'alarme (9, 82, 92, 102) à l'intérieur de ladite plage de couverture de détection en se basant sur des informations en temps réel,
lesdites informations en temps réel étant en lien avec un objet (6, 81, 91, 108) qui court un risque de collision avec un oiseau et contenant des informations représentant une ou plusieurs d'une réflexion et/ou d'une section transversale de radar (RCS) d'un oiseau détecté, d'un type d'oiseau, de vitesse en l'air ou au sol de l'oiseau détecté, de longueur de piste et/ou de forme de piste de l'oiseau détecté, d'un statut de l'objet de collision, de vitesse et/ou de direction du vent, de conditions météorologiques et d'une distance d'un utilisateur à l'oiseau détecté,
dans lequel ladite zone d'alarme (9, 82, 92, 102) présente une limite extérieure (10, 83, 93, 103) et une limite intérieure (14, 84, 94, 104), **caractérisé en ce que**
le procédé comprend en outre de changer de façon dynamique ladite limite intérieure (14, 84, 94, 104) en se basant sur l'emplacement de l'objet de collision (6, 81, 91, 108), la vitesse au sol de l'oiseau détecté (85, 95, 105) et la vitesse et la direction du vent, et **en ce que**
la génération d'une alarme n'est pas autorisée lorsque l'oiseau détecté (85, 95, 105) est à l'intérieur de la limite intérieure (14, 84, 94, 104) de la zone d'alarme (9, 82, 92, 102) et par conséquent en-dehors de la zone d'alarme définie par lesdites limites extérieure et intérieure.

10. Procédé selon la revendication 9, dans lequel la plage de couverture de détection du système de détection d'oiseaux est une plage de couverture de détection statique.

11. Procédé selon la revendication 9 ou 10, comprenant en outre de permettre la génération d'une alarme pour un oiseau pisté (85, 95, 105) uniquement lorsque :
a. la réflexion et/ou la section transversale de radar (RCS) de l'oiseau détecté (85, 95, 105) se situe au-dessus d'un seuil donné, et
b. la vitesse au sol ou en l'air de l'oiseau détecté (85, 95, 105) se situe au-dessus d'un seuil donné, et
c. la longueur de piste de l'oiseau détecté (85, 95, 105) se situe au-dessus d'un seuil donné ou bien la piste a une forme prédéfinie, par ex. une forme circulaire pour les oiseaux qui prennent leur envol.

12. Procédé selon l'une quelconque des revendications 9 à 11, comprenant en outre de permettre la génération d'une alarme pour un oiseau pisté (85, 95, 105) uniquement lorsque :
a. la direction de l'oiseau pisté (85, 95, 105) devrait potentiellement croiser une zone cible (6, 81, 91, 101) telle qu'une piste (6, 81) ;
b. un temps estimé pour l'intersection avec la zone cible (6, 81, 91, 101) se situe au-dessus d'une durée minimale prédéfinie ; et
c. la hauteur au-dessus du sol de l'oiseau pisté (85, 95, 105) se situe dans une fenêtre d'altitude prédéfinie.

13. Procédé selon l'une quelconque des revendications 9 à 12, dans lequel lesdites informations sont utilisées pour une analyse de probabilité de collision mise à jour en continu.
